# EUROPEAN PATENT APPLICATION

(11) **EP 4 180 157 A1**
(43) Date of publication of application: **17.05.2023**
(21) Application number: 21207507.1
(22) Date of filing: 10.11.2021
(51) Int. Cl.: B23B 47/34

(54) **DRILLING DEVICE**

(71) Applicant: VibiCore AB, 187 67 Täby (SE)
(72) Inventor: LIDHOLM, Svante, 184 51 ÖSTERSKÄR (SE); ANDERSSON, Thomas, 186 43 VALLENTUNA (SE); LINDWALL, Mats, 187 67 TÄBY (SE)
(74) Representative: Groth & Co. KB

(57) **Abstract**

Disclosed herein is a drill device comprising:
- a housing (2);
- a drill spindle unit (12) arranged at least partially in the housing (2), the drill spindle unit (12) comprising a drill assembly (32), the drill assembly (32) comprising bearings (40), a first coupling portion (30), a drill axle (44) configured to receive a drill, the drill axle (44) being embedded in the bearings (40) and being configured to rotate about a longitudinal axis (a), the drill spindle unit (12) further comprising at least a first elastic element (26) that is at least partially compressed when it is mounted in the drill device.
The drill device further comprises a pulse spindle unit (14) having a cylinder-shaped pulse spindle (34) that can be rotated about its longitudinal axis (b), the cylinder-shaped pulse spindle (34) being at least partially arranged within the housing (2), the cylinder-shaped pulse spindle (34) comprising a milled surface area (50) on the lateral surface. The longitudinal axis (b) of the cylinder-shaped pulse spindle (34) is arranged perpendicular to the longitudinal axis (a) of the drill axle (44), the drill spindle unit (12) being arranged so that the first coupling portion (30) is pushed towards the cylinder-shaped pulse spindle (34) so that along the longitudinal axis (a) of the drill axle (44) pulses can be generated when the cylinder-shaped pulse spindle (34) is rotating due to the lateral surface of the cylinder-shaped pulse spindle (34), which lateral surface is interrupted by the milled surface area (50) and due to the pre-compression of the elastic force of the at least partially compressed first elastic element (26).

## Description

### Technical Field

The invention relates to the field of drilling devices in particular to a drilling device that can provide efficient chip breaking, the drilling device being usable with all kinds of materials such as metal, composite, plastic, carbon and for multilayer material or composite material where different layers of material, such as metal and carbon or other fiber material layers are combined.

### Background of the Invention

Drilling holes in components and parts that are later used to assemble vehicles, aircrafts or other equipment was historically an easier task since the material was usually uniform, homogenous and, in many cases, it was made of metal such as aluminum, steel or titan, for example in the aircraft manufacturing industry or space industry. This means that rather high-quality holes could be drilled using conventional drilling tools and a decent machine. However, such a conventional drill typically produced rather long spiral chips that are removed from the hole via the spiral flutes of the drill tool. Such long spiral chips are usually not wanted since they pose a problem to the drill hole quality. When a hole has to be drilled into a composite material such as for example aluminum - carbon - titan then these spiral chips pose an even larger problem and in particular the metal cuttings in the example of a composite material comprising layers of aluminum - carbon - titan can destroy the surface of the drill hole in the carbon material. That is why small chips are desirable since they do not destroy the carbon or other material in the hole during removal from the hole and since they do not enter in between material layers during drilling, because they can be efficiently removed from the drill hole. In order to avoid the destruction of holes, known solutions of drilling devices provide an oscillating movement in the longitudinal direction of the drill spindle that is typically sinus shaped. When a drill spindle oscillates according to sinus shaped pulses it is possible to provide chips, in particular a spiral chip that is thinner at regular distances but it is not possible to provide sharp predetermined breaking points on the spiral chips. The sinus shaped curve of the pulse will lead to a smooth surface and harmonic thickness even if it is following the sinus shaped curve. The chips in the prior art are therewith usually not homogenous in thickness. The chips produced by the drilling device as described herein are small and comprise sharp predetermined breaking points. In addition, it is possible to remove more material per time with the drilling device as described herein. This is because of the very short and distinct pulse and the therewith connected very quick acceleration of the drill spindle during such a pulse leads to a longer engagement of the drill tip in the material and therewith to a higher material removal per time period compared to known drill devices. One may now say that it is rather simple to change the curve from sinusoidal to something peak formed but this is not a as simple as one may think. The limitation of providing a sinus shaped pulse is usually due to electronic, mechanic and/or hydraulic systems used to generate the oscillation, they can just not provide such a high axial acceleration that would make the sinus shaped pulse/curve peak formed having a plateau after the peak on the drill tip. If one analyzes the thickness of the spiral cutting that is cut using a sinus pulse the thickness follows a wave shape. The pulse acceleration cannot be faster than the electrical energy or hydraulic fluid can provide and thus a sinus shaped pulse is typically what can be achieved with known drill devices and therewith it is difficult to provide a drilling device that produces small cuttings or small cutting chips combined with high productivity.

In addition to the above the manufacturing industry is relying more and more on robots and theses robots have limitations as well. The force of the drill device's axial pulse is usually absorbed by typically stiff fixtures or rigid computer numerical control (CNC) machines. Robots or robotic arms generally struggle with absorbing such vibrations created by high accelerations due to low stiffness. Robots are typically not built for that. Since the use of robots and robotic devices in industrial manufacturing processes is increasing, there is however a need to provide a drill device that can provide pulses and which drill device can be held by a robot or robotic arm.

Another challenge when holes need to be drilled in composite material is usually that the drill needs to be controlled in different ways depending on the current position or current depth of the drill tip in the hole. For example when a hole needs to be drilled in a composite material comprising an outer shell of 3mm aluminum, a middle layer of 5mm carbon fiber and an inner layer of 3mm titan then the drill device could theoretically operate with pulse and appropriate cutting data for aluminum and titan and without pulse in carbon fiber. This means that the drilling device will pulse or oscillate from 0 to 3 mm () and then not pulse form 3mm to 8mm in the carbon layer and then pulse again from 8mm to 11mm in the titan layer. Such adjustment or controlling abilities of the drill device are not possible today with mechanical tool holder solutions but possible with hydraulic or electromagnetic solutions. However, there is always a limitation either in (high) frequency or in (high) amplitude and it is difficult to provide sharp peaked- and plateaued- curves that can provide sharp predetermined breaking points in the chips.

The above-described drawbacks of the prior art or known devices matter even more when it is considered that manufacturing of aircrafts, vehicles, components and machinery. In addition, the prior art solutions do not provide enough productivity. Many of the components used in various industries are nowadays composite materials and they require therewith subtle and improved handling.

### Summary of the Invention

An object of the present invention is to provide a drill device that remedies at least a part of the above-described drawbacks and that is efficient, and versatile.

In view of the above-mentioned problems the inventors of the present invention have discovered that is possible to remedy all of the above-mentioned drawbacks of known drill devices by providing a drill device where the drill spindle unit is precharged via an elastic element that can store potential energy, for example a spring, an elastomer, a gas spring or a hydraulic spring in combination with a novel type of a pulse spindle unit, in which a milled surface area is provide on a center axle, which milled surface area can provide pulse oscillations when it is rotating. The inventors have discovered that such a combination of elastic element and milled surface on a pulse spindle can provide a very distinct and sharp pulse that is peak formed having a plateau on top and a high amount of flexibility during the application of the drill device as explained later herein. In addition, the inventors have also realized that it is possible to minimize vibrations resulting from the drill device by using a damping unit having a counterweight, which damping unit is also capable of storing potential energy via an elastic element, said counterweight oscillating in phase and amplitude with the drill spindle unit to cancel out vibrations resulting from the longitudinal pulses of the drill spindle. The inventors also discovered that the counterweight may be arranged at 180 degrees versus the drill spindle unit so that the counterweight moves in counter phase to the drill spindle unit for cancelling the vibrations.

Disclosed herein is a drill device for drilling holes in components comprising:
- a housing having a first motion link and
- a drill spindle unit arranged at least partially in the housing, the drill spindle unit comprising a drill assembly, which is guided by the first motion link, the drill assembly comprising bearings, a first coupling portion, a drill axle configured to receive a drill, the drill axle being embedded in the bearings and being configured to rotate about a longitudinal axis, the drill spindle unit further comprising at least a first elastic element that is abutting the housing with one end and the drill assembly with the other end, whereby said first elastic element is at least partially compressed when it is mounted in the drill device.

The drill device further comprises a pulse spindle unit comprising a cylinder-shaped pulse spindle that can be rotated about its longitudinal axis, the cylinder-shaped pulse spindle is at least partially arranged within the housing, and it comprises a milled surface area on a lateral cylindric surface. The longitudinal axis of the cylinder-shaped pulse spindle is arranged perpendicular to the longitudinal axis of the drill axle, the drill spindle unit is arranged so that the first coupling portion is pushed towards the cylinder-shaped pulse spindle so that along the longitudinal axis of the drill axle pulses can be generated when the cylinder-shaped pulse spindle is rotating due to the milled surface area and the regular lateral surface that upon rotation of the cylinder-shaped pulse spindle engage the first coupling element and the at least partially compressed first elastic element, which constantly pushes the drill assembly towards the cylinder-shaped pulse spindle.

The above-described embodiment provides a drill device that can generate very sharp and distinct pulses in the drill. Due to the rotational speed of the pulse spindle, the potential energy stored in the first elastic element and the shape of the milled surface area the pulses generated are not sinusoidal but rather distinct and sharp and thereby create an intended breaking point in the cuttings when a hole is drilled.

The first elastic element ensures that the drill assembly tightly follows the lateral cylindric surface of the cylinder-shaped via the first coupling portion. The lateral cylindric surface is only interrupted by the milled surface area. Every time the milled surface area passes the first coupling portion a pulse is generated in the drill assembly. Due to the preloading of the first elastic element the energy transformation from potential energy to kinetic energy is immediately available without any time delay and that is what generates the very fast acceleration of the drill assembly and therewith the drill tip of the drill generating a distinct and sharp pulse.

According to the above explanation, the cylinder-shaped pulse spindle acts as an oscillator and may also be called oscillator or oscillator spindle.

Additionally, the peak formed curve having a plateau on top enables the drill device described herein to provide a very efficient and fast drilling, since the time of work is longer because the time of work (engagement of the drill tip) corresponds to the plateau, as explained later herein. This results also in thicker chips and a higher removal of material per revolution of the drill and drill tip, respectively.

In a preferred embodiment the drill device further comprises a damping unit arranged at least partially in the housing, the housing comprising a second motion link, the damping unit comprises a second coupling portion, a counterweight engaging the second motion link, at least a second elastic element that is engaging the housing and the counterweight, whereby said second elastic element is at least partially compressed, wherein the cylinder-shaped pulse spindle comprises a pair of milled surface areas arranged on the cylinder-shaped pulse spindle 180 degrees from one another and on opposite sides of the cylinder-shaped pulse spindle, the damping unit and the drill spindle unit being arranged opposite one another on either side of the pulse spindle unit, so that the first coupling portion and the second coupling portion are pushed towards the cylinder-shaped pulse spindle opposite one another due to the first and the second elastic elements, so that synchronized pulses along the longitudinal axis of the drill axle in the damping unit and the drill assembly can be generated when the cylinder-shaped pulse spindle is rotating.

Several pairs of milled surfaces may be designed on the cylinder-shaped pulse spindle. As long as these pairs of milled surfaces are symmetrically arranged on the circumference of the cylinder-shaped pulse spindle, the system will work, it is for example possible to provide two pairs of milled surfaces on the cylinder-shaped pulse spindle, spaced at 90° from one another. It is even possible to have more than two pairs spaced at regular angle intervals around the circumference of the cylinder-shaped pulse spindle.

In another embodiment the drilling device may comprise two cylinder-shaped pulse spindles in synchronous rotation, one cylinder-shaped pulse spindle for the counterweight and the other for the drill axle.

The damping unit is essentially canceling out the pulses of the drill assembly in the drill device, but not at the drill head obviously, so that a CNC machine, a fixture or a robot is not subjected to vibrations when holding the drill device.

The drill spindle unit and the damping unit are arranged 180 degrees from one another, thus opposite one another, so that the damping unit can cancel out the pulses of the drill assembly. Arranging the counterweight in a similar manner as the drill assembly, namely coupled to a second elastic element for the storage of kinetic energy via potential energy makes it possible to provide a very smart and elegant solution for canceling the pulses of the drill assembly outside the drill device so that a fixture, a CNC machine or a robot can hold the drill device.

The angle may be another, as long as it corresponds to the angle of the arrangement of the milled surfaces. If for instance, as mentioned above, two pairs of milled surfaces spaced at 90° on the cylinder-shaped pulse spindle are used, then the angle between the drill spindle unit and the damping unit may be 90°.

In an embodiment the cylinder-shaped pulse spindle may comprise more than one pair of milled surface areas arranged opposite one another and whereby the milled surface areas may be spaced at regular intervals around the circumference of the cylinder-shaped pulse spindle.

In an embodiment the milled surface area(s) are planar. Any other suitable shape may however be considered, such as convex or concave depending on the curve form that needs to be provided or achieved.

The shape or design of the milled surface area(s) define how the pulse shape is formed. A planar surface area generates a very quick acceleration in the drill assembly and therewith a sharp and distinct pulse.

The design and shape and acceleration is the same for the counterweight of the damping unit even though herein the discussed relevant pulse is the pulse generated in the drill assembly. With the described design and configuration any shape, amplitude or curve form of the pulse in the drill assembly will at least be very similar if not exactly the same in the counterweight pulse so that the counterweight pulse can cancel the vibrations of the entire drill device.

In an embodiment the cylinder-shaped pulse spindle can be displaced along its longitudinal axis, for example via a servomotor, the cylinder-shaped pulse spindle comprising a part that is free of the milled surface(s), which part can be adjusted so that a point of contact between cylinder-shaped Pulse spindle and the first and/or second coupling portion can be adjusted for enabling a drilling operation without any pulses.

This makes the drill device more versatile since the drill can also be used to drill in materials with different properties and the configuration of the drill device can be changed in real time depending on the position of the drill tip. If there is no pulse in the drill assembly, there is no pulse in the damping unit due to the described design.

In an embodiment the cylinder-shaped pulse spindle can be moved up and down along its longitudinal axis, for example via a servomotor, and wherein the milled surface area(s) are conically shaped as seen along the longitudinal axis of the cylinder-shaped pulse spindle so that a point of contact between the cylinder-shaped pulse spindle and the first and/or second coupling portion can be adjusted and that there with the amplitude of the pulses can be varied and adjusted.

Similarly, as described above, if the milled surface areas are conical or inclined as seen along the longitudinal axis of the cylinder-shaped pulse spindle, for instance with a decreasing cross-sectional area of the pulse spindle, the higher the amplitude of the pulse will be if the cylinder-shaped pulse spindle is moved outwards (or inwards, depending on the direction of inclination) from the housing and vice versa. The amplitude is determined by the distance of the milled surface area to the lateral cylindric surface of the cylinder-shaped pulse spindle.

The above can be useful for various reasons. The configuration of the drill may be adapted to the material properties and the needed amplitude and frequency of the pulses/oscillations for that material. Appropriate cutting speeds and feeds may be chosen.

In an embodiment the first motion link(s) may comprise membranes, preferably one or two membranes, whereby the drill spindle unit and/or the dampening unit are embedded and fastened in the housing via such membranes.

Each of the first and second motion link may comprise two membranes.

The membranes may be made of sheet metal.

The membranes may be elastic membranes.

The membranes have the effect that the bearing of the drill spindle unit in the housing is facilitated and optimized and for guiding the motion of the drill assembly along the longitudinal axis of the drill axle.

In an embodiment the counterweight is at least partially replaceable so that its weight can be matched to the drill assembly.

Depending on the used drill the counterweight may be replaceable partially or fully or it may be modular for adding or removing weight depending on the weight of the drill assembly.

Optimally the weight of the counterweight corresponds at least more or less to the weight of the drill assembly.

This can help to achieve an optimal damping of the drill assembly and thus reduced vibrations for a CNC machine, a fixture or a robot, which is holding the drill device.

In another embodiment the first coupling portion and/or the second coupling portion is designed as a pulley with ball bearings.

This may reduce the friction at the point of contact between cylinder-shaped pulse spindle and the first coupling portion and/or the second coupling portion.

In an embodiment the first and/or the second elastic element(s) is a spring, an elastomer, a pneumatic or hydraulic cylinder or any other suitable element that can store potential energy and convert this potential energy into kinetic energy.

According to another embodiment the first elastic element and/or second elastic element each comprise a pair of a spring, an elastomer, a pneumatic or hydraulic cylinder or any other suitable element that can convert potential energy into kinetic energy or a combination thereof.

Using elastic elements according to any of the above helps to achieve an optimal functioning of the drill device.

Alternatively, to the membranes the at least one motion link of the housing may comprise protrusions that engage a guiding portion in the housing for guiding the motion of the drill assembly along the longitudinal axis of the drill axle. Similarly, the damping unit comprises protrusions, which are guided in a guiding portion of the housing for guiding the motion of the damping unit along the longitudinal axis of the drill axle.

Protrusions or other forms of engagement elements between the at least motion link and the dampening unit and drill assembly, respectively may improve the motion of the damping unit and the drill assembly and increase accuracy and therewith operating reliability.

The motion link may comprise two guiding motion links on either side of the damping unit and the drill assembly, respectively.

In a further embodiment the cylinder-shaped pulse spindle may comprise a cylindric portion with a diameter greater than the diameter of the cylinder-shaped pulse spindle and wherein cylindric portion comprises the milled surface area(s) and the lateral surface.

The cylindric portion can help operating liability and manufacturing of the pulse spindle unit. In addition, it may provide the opportunity to generate a bigger effect of the milled surface.

### Brief Description of the Drawings

The present invention will now be described, for exemplary purposes, in more detail by way of an embodiment(s) and with reference to the enclosed drawings, in which:
- Fig. 1: schematically illustrates a perspective view of a drill device according to the invention;
- Fig. 2: schematically illustrates a cross sectional view of figure 1 with a housing, the cross-sectional view being cut along line II-II of figure 1;
- Fig. 3: schematically illustrates a perspective view of a drill device according to the invention, whereby a housing is not shown for illustrative purposes;
- Fig. 4: schematically illustrates a principle of the oscillation in the drill device according to the invention;
- Fig. 5: schematically illustrates a perspective and detailed view of a cylinder-shaped pulse spindle and parts of a damping unit and drill assembly, respectively;
- Fig. 6: schematically illustrates the cylinder-shaped pulse spindle in a first position;
- Fig. 7: schematically illustrates the cylinder-shaped pulse spindle in a second position; and
- Fig. 8: schematically illustrates the pulse curve according to the invention in comparison with a sinusoidal curve according to the prior art.

### Detailed Description

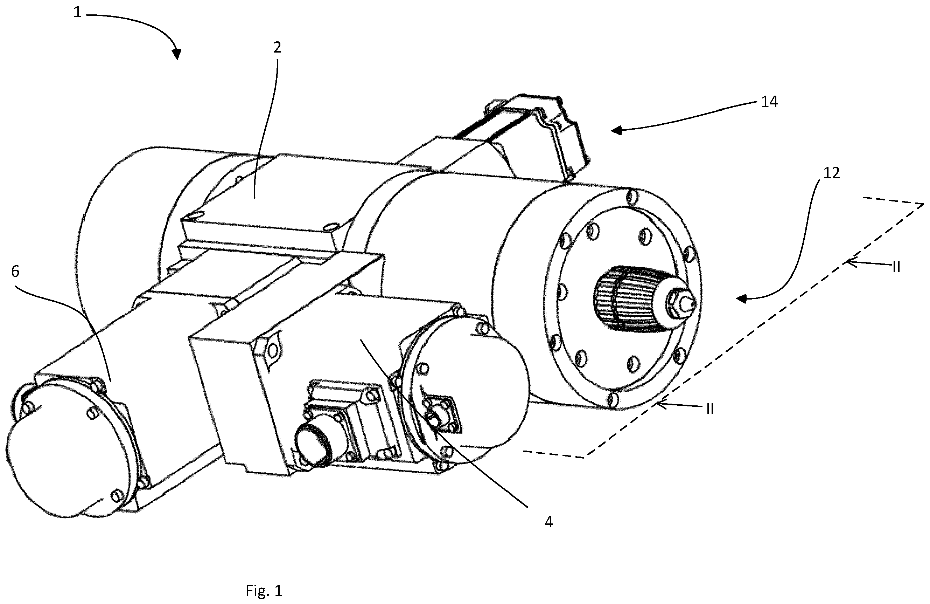

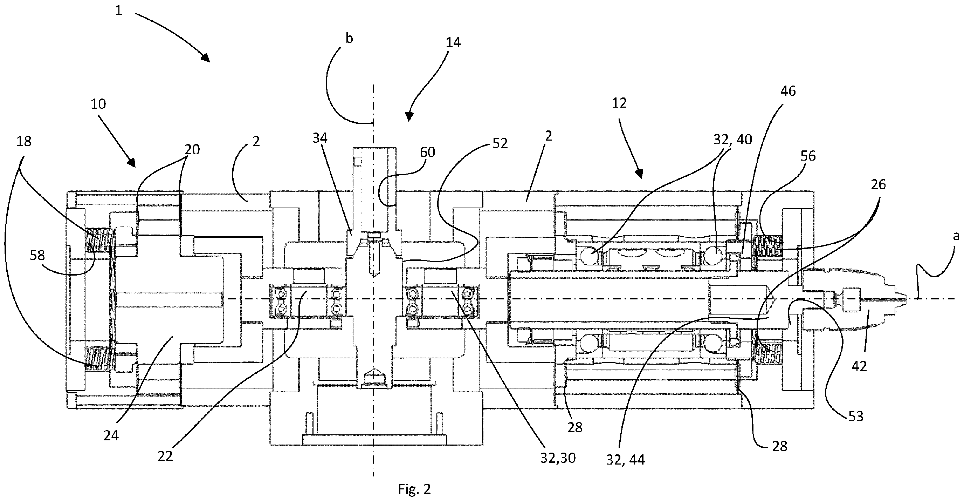

Figure 1 illustrates a perspective view of the drill device 1 according to the invention. The drill device 1 comprises a housing 2, a first motor 4 designed to drive a drill spindle unit 12 and a second motor 6 designed to drive a pulse spindle unit 14. The first motor 4 and the second motor 6 may be servomotors powered by electricity. In the exemplary embodiment of figure 1 the first motor 4 drives the drill spindle unit 12 via a belt (not visible in figure 1) and the second motor 6 drives the pulse spindle unit 14 directly. The first motor 4 may drive the drill spindle unit 12 directly or it may drive the drill spindle via a belt or chain. Both solutions can be used in the invention. When the motor 4 drives the drill spindle unit 12 directly, then the motor might be integrated with the drill assembly and move together with the drill assembly when the pulses are generated (see below description relating to figure 2). Figure 1 further illustrates a plane II-II that indicates where the cross-sectional view of figure 2 is taken from.

Figure 2 illustrates the cross-sectional view of figure 1 without the first motor 4 and without the second motor 6. In figure 2 the drill device 1 is shown comprising a housing 2, a damping unit 10, the drill spindle unit 12 and the pulse spindle unit 14, whereby the damping unit 10, the drill spindle unit 12 and the pulse spindle unit 14 are at least partially embedded in the housing 2.

The drill spindle unit 12 comprises a drill assembly 32 having a drill axle 44, a drill head configured to receive a drill and bearings 40, two first elastic elements 26 illustrated in the form of springs, a first coupling portion 30 and a support ring element 46. The pair of first elastic elements 46 is supported with one end on the housing 2, for instance on a shoulder 56 of the housing 2, and with the other end on the support ring element 46, which bears against the bearings 40 so that it is not rotating when the drill axle 44 is rotating. On the other end of the drill assembly 32 the first coupling portion 30 is located and arranged. The first coupling portion 30 is designed as a roller with bearings, for example ball bearings, and configured to be pressed towards the pulse spindle unit 14, which means that the pair of first elastic elements 26 are compressed or pre-tensioned in any situation, since the movement of the drill assembly 32 is limited in a direction along a longitudinal axis a defined by the drill axle at one end via the first coupling portion 30 and at the other end via a shoulder 53 of the housing 2 so the drill assembly 32 cannot exit from the housing 2. The drill head 42 is shown without a drill but in case a drill is placed in the drill head 42, the drill forms part of the drill assembly 32. Due to the described construction and arrangement of the drill spindle unit 12 and the drill assembly 32, respectively, the drill assembly 32 is movable along the longitudinal axis a defined by the drill axle 44 and in particular towards the pulse spindle unit 14 via the pair of first elastic elements 26. In the illustrated position in figure 2 the drill assembly 32 is moved all the way against the pair of first elastic elements 26 and it is snug towards the shoulder 53. In order to generate the pulse, the pulse spindle unit 14 is used.

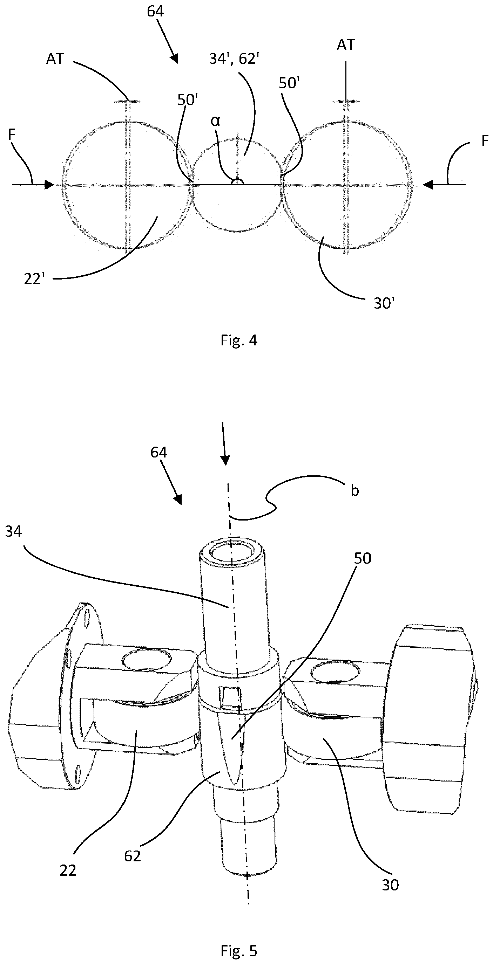

The pulse spindle unit 14 comprises a cylinder-shaped pulse spindle 34, which defines a longitudinal axis b, and preferably a motor 6 (not shown in figure 2). The cylinder-shaped pulse spindle 34 is embedded in the housing 2, via an opening 60 and extends into the housing 2 so that it is in contact with the first coupling element 30 of the drill assembly 32. In figure 2 it is not possible to see but the cylinder-shaped pulse spindle 34 actually comprises milled surface areas (c.f. figures 4 to 7), which milled surface areas do not correspond to the regular lateral surface 52 of the cylinder-shaped pulse spindle 34 but they interrupt this smooth and regular lateral surface 52, so that upon rotation of the cylinder-shaped pulse spindle 34 around its longitudinal axis b the drill assembly 32 is moving towards the cylinder-shaped pulse spindle 34 when the first coupling element 30 reaches the milled surface area and the pair of first elastic elements 26 push the drill assembly 32 into the milled surface. Upon further rotation of the cylinder-shaped pulse spindle 34 the first coupling element 30 and the drill assembly 32, respectively, are moved back along the longitudinal direction a defined by the drill axle 44, as soon as the first coupling element 30 is leaving the milled surface behind and gets back into contact with the regular lateral surface 52 of the cylinder-shaped pulse spindle 34. This means that a pulse in the drill axle 44 and therewith the drill, if connected to the drill head 42, is generated every time the milled surface area is passing the first coupling element 30. This in itself is already an inventive solution without the camping unit 10. If the damping unit 10 is not used in the embodiment of figure 2, the drill device 1 works but all the vibrations from the generated pulses have to be absorbed by a fixture, a CNC machine or a robot. Therefore, the damping unit 10 is illustrated as well in figure 2.

The damping unit 10 comprises a counterweight 24, a pair of second elastic elements 18 and a second coupling portion 22 comprising roller bearings. From the illustration of figure 2 it can be seen that the counterweight 24 moves synchronous with the drill assembly 32 and since the counterweight 24 is similar or the same as measured in weight as the drill assembly 32, the vibrations generated by the pulses in the drill device 1 will be substantially dampened so that a robot is not affected by the vibrations. The counterweight 24 is pressed or pushed towards the pulse spindle unit 14 by the pair of second elastic elements 18 so that the second coupling element 22 is abutting and in touch with the cylinder-shaped pulse spindle 34. The pair of elastic elements 18 are abutting an end cap 58 of the housing 2 with one end and the counterweight 24 with the other end. In the position illustrated in figure 2 the pair of elastic elements 18 are pre-tensioned and under pressure so that the counterweight 24 is constantly pressed towards the cylinder-shaped pulse spindle 34. The pulse generation is explained in more detail refereeing to figures 4 to 7.

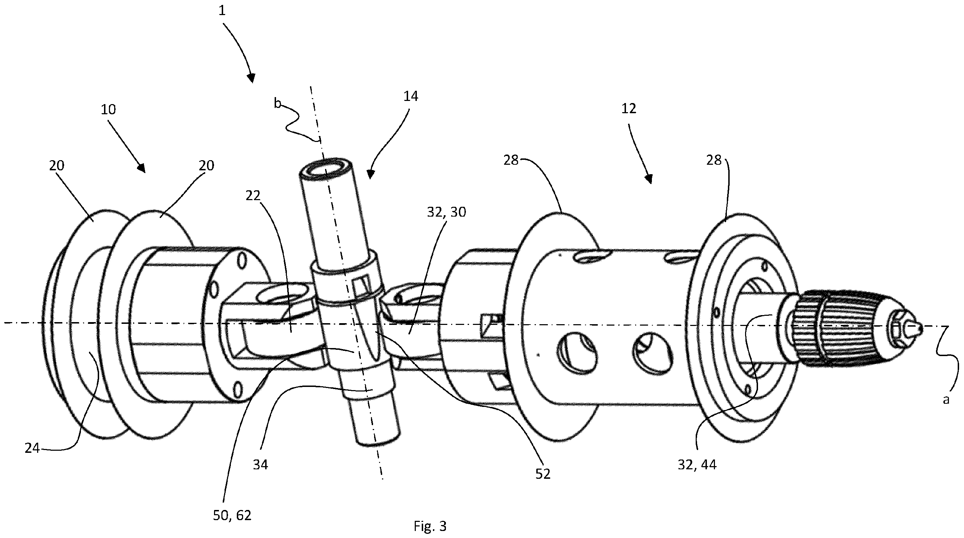

Figure 3 shows a perspective view of the drill device 1 comprising the damping unit 10, the drill spindle unit 12 and the pulse spindle unit 14 in which figure 3 the housing is omitted for illustrative purposes. In addition to figure 2 the membranes 20, 28 are shown, which membranes 20, 28 are provided to optimally mount the drill assembly 32 and the damping unit 10 in the housing. The membranes 20, 28 are designed to have an additional effect on the pulse generation and damping, respectively. Preferably they are made of sheet metal and support the effect of the pair of first and second elastic elements 26, 18 as explained referring to figure 2. The membranes 20, 28 further have the effect that the drill assembly 32 and the counterweight 24 are embedded movable along the longitudinal axis a defined by the drill axle 44 in the housing. Turning back to figure 2, the membranes 28 that hold drill assembly 32 and the membranes 20 that hold the counterweight 24 are shown. The membranes 20, 28 are clamped in the housing 2 for example via screw/thread mechanism (not indicated in figure 2). In a similar manner are they fastened to the drill assembly 32 and counterweight 24, respectively, namely by clamping two elements together. Other fastening solutions of the membranes 20, 28 such as gluing, or even form-fit (press fit) connections can be embodied in the drill device 1 disclosed herein.

Alternatively, to the membranes 20, 28 damping unit 10 and the drill assembly 32 may just be embodied movable along the motion link in the housing 2. Thus, the membranes 20, 28 improve the functioning of the invention but they are not necessary in order to achieve the inventive thought of the invention.

The membranes 20, 28 are configured to replace any linear motion link configuration cand/or are configured to prevent a radial movement of the counterweight and/or the drill axle.

Figure 3 further illustrates the cylinder-shaped pulse spindle 34 well. The cylinder-shaped pulse spindle 34 comprises bearings (not shown), which bearings are embedded in the housing 2 for holding the cylinder-shaped pulse spindle 34 in place so that it can precisely rotate. The cylinder-shaped pulse spindle 34 further comprises a cylindric portion 62 that has a diameter that is bigger than the rest of the cylinder-shaped pulse spindle 34. The cylindric portion 62 engages and is in contact with the first coupling portion 30 of the drill assembly 32 and the second coupling portion 22 of the damping unit 10. The diameter of the cylindric portion 62 is about 2-15% greater than the diameter of the cylinder-shaped pulse spindle 34. The cylindric portion may however be chosen to have the same diameter as the cylinder-shaped pulse spindle (not shown). On the cylindric portion 62 the milled surface 50, which milled surface 50 is used to generate the pulses, is arranged. The functioning of the pulse generation via the cylinder-shaped pulse spindle 34 will now be discussed and explained. Still referring to figure 3 there is however one fact that is important to note: The drill device 1 functions without the entire damping unit 10 although no cancellation of the vibrations is achieved in such a case. But from a practical point of view the pulses in the drill axle and therewith the drill can be generated without the damping unit 10 being present. Using the damping unit 10 makes the drill device 1 more accurate and suitable for a robot.

In addition, and still referring to figure 3 it is to be noted that the cylinder-shaped pulse spindle 34 can move along its longitudinal axis b and since the milled surface 50 is conical or inclined as seen in relation to the longitudinal axis b of the cylinder-shaped pulse spindle 34, the amplitude of the pulses can be varied. The movement may be provided via a motor, for example a servomotor and a corresponding motion link or the like designed in the housing. The change of the position along the axis b can be done during operation of the drill device 1 and since the cylindric portion 62 actually comprises a part that is free of the milled surface 50 the drill device 1 can be operated without any pulse.

The cylindric portion 62 defines a regular lateral surface 52 of a cylinder, which is interrupted by the pair of milled surface areas 50 in order to generate a disruption that generates a pulse in the damping unit 10/counterweight 24 and simultaneously a pulse in the drill assembly 32.

Turning now to figure 4 the basic principle of the pulse generation mechanism 64 is explained. Figure 4 illustrates a cross sectional view onto the cylindric portion 62' of the cylinder-shaped pulse spindle 34' and the first coupling element 30' of the drill assembly 32 and the second coupling element 22' of the damping unit 10. Reference numbers correspond to previous reference numbers and components but are indicated with an apostrophe since they are shown simplified. Please note that in figures 4 to 7 do not illustrate the pairs of first and second elastic elements 26, 18 for illustrative purposes. It is to be noted that these two pairs of first and second elastic elements 26, 18 from part of the pulse generation mechanism 64. Figure 4, illustrates the principle behind the pulse generation mechanism 64 comprising the pair of first and second elastic elements 26, 18, an oscillator 34', the cylinder-shaped pulse spindle and two vibrating elements 10', 32', meaning the damping unit and the drill assembly. The pair of arrows F in figure 4 illustrate the elastic force generated by the pairs of first and second elastic elements 26, 18, the double arrows illustrate the amplitude AT that can be generated by the milled surface areas 50'. The milled surface areas 50' may be designed as planar surfaces but they do not have to be planar. The pair of milled surfaces 50' is arranged in an angle α on the oscillator 34' on opposite sides of the latter. The angle α is chosen to be 180° so that the pulse in the drill assembly 32 is generated at the same time as the pulse in the damping unit 10 for optimal damping of vibrations outside the drill device 1. This angle may be different depending on the layout and angle(s) at which the milled surfaces are arranged.

As mentioned previously the drill device 1 works without damping unit 10 and in case no damping unit is embodied the pair of milled surfaces 50' may be a single milled surface 50'.

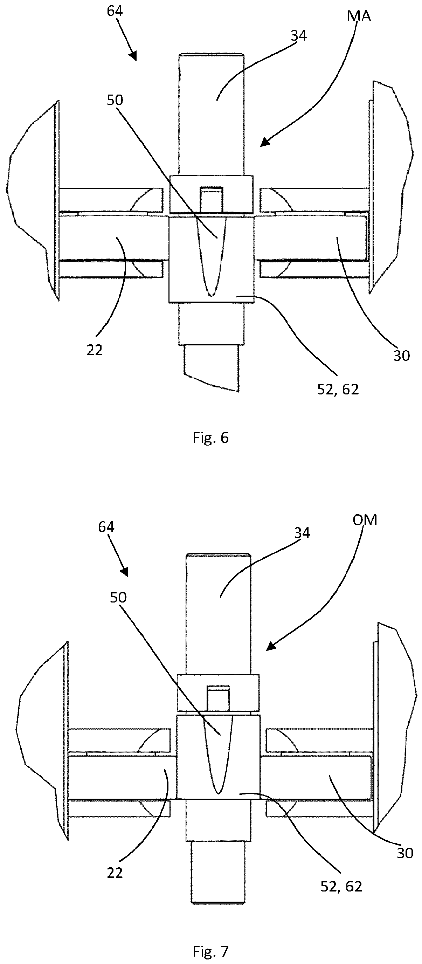

Turning now to figure 5 the design of the pair of milled surfaces 50 and the change of the amplitude are explained in more detail. In figure 5 the milled surface area 50 and its conical design is illustrated. In figure 5 only one of the pair of milled surface areas 50 is shown the other one is positioned on the other side of the cylinder-shaped pulse spindle 34 in the snapshot of figure 5. The milled surface area 50 is inclined in relation to the longitudinal axis b of the cylinder-shaped pulse spindle 34, as previously explained. The first coupling element 30 and the second coupling element 22 are illustrated and the cylinder-shaped pulse spindle is moved shown in the position where the highest amplitude is generated, namely at the upper end of the milled surface area 50 and the cylindric portion 62 of the cylinder-shaped pulse spindle 34. The direction of the inclination of the milled surface area 50 does not really matter, since the cylinder-shaped pulse spindle 34 and the cylindric portion 62 can be moved along the longitudinal axis b. In the illustration of figure 5 the highest or greatest amplitude is generated on the top of the cylindric portion 62 and the cylinder-shaped pulse spindle 34 is also shown in the position where the amplitude is maximal, which is also shown in figure 6. When the cylinder-shaped pulse spindle 34 is moved downwards, in the direction of the arrow in figure 5 and along the longitudinal axis b, the amplitude gets continuously smaller until it vanishes to 0 (zero) as shown in figure 7. Any position in between figures 6 and 7 is possible. When the cylinder-shaped pulse spindle 34 is in zero amplitude position, as shown in figure 7, then there is now amplitude generated and the drill operates without pulse.

In figure 6 the cylinder-shaped pulse spindle 34 is shown in the max-Amplitude position MA while in figure 7 the cylinder-shaped pulse spindle 34 is shown in the zero Amplitude position OM. In the max-Amplitude position MA the Amplitude is the greatest, independent of the frequency, while in the zero Amplitude position OM there is no amplitude and therewith zero/no frequency.

The skilled person will now understand the clever thought of the invention. When the frequency needs to be changed the rotational speed of the cylinder-shaped pulse spindle 34 can be increased, when the amplitude needs to be changed then the cylinder-shaped pulse spindle 34 is moved along the longitudinal axis b. During the drilling process any of frequency or amplitude can be changed without interrupting the drilling process, even amplitude 0 (zero) with zero/no frequency.

The material of the first coupling element 30 and the second coupling element 22 that is engaging the cylinder-shaped pulse spindle 34 may be bearings made of metal or steel.

Please note that the cylindric portion 62 having the greater diameter than the cylinder-shaped pulse spindle 34 and comprising the pair of milled surface areas 50 is shown in the embodiments, the invention however also works without the cylindric portion 62 by milling the milled surface areas 50 directly on the cylinder-shaped pulse spindle 34.

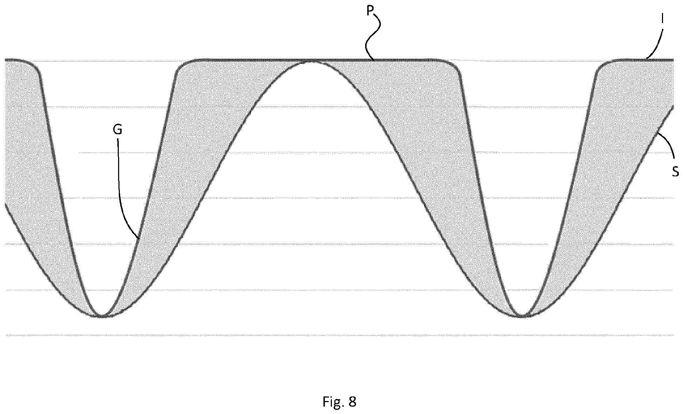

Finally turning to figure 8, which shows a sinusoidal curve S pulse curve generated by a drill device according to the prior art and a sharp pulse curve I generated with a drill device 1 according to the invention. As previously mentioned, the sharp pulse curve I generates a clear and sharp predetermined breaking point in the cuttings of the drilling process. From figure 8 it becomes also visible how fast the acceleration of the pulse generated with the drill device 1 according to the invention actually is. The gradient G of the sharp pulse curve I leading to the pulse plateau P is very steep, closer to infinite than 1 (y/x), which means that the acceleration is very quick, sharp and distinct and not harmonic and homogenous as in the sinusoidal curve S. This will break the cutting chips or at least inflict very distinct predetermined breaking points in the cuttings so that the cuttings break apart when they are conveyed out the drill hole by the spiral shape of the drill. The gradient G makes the curve peak shaped, and the plateau P shows the engagement of the drill tip in the material. Figure 8 illustrates very well the technical effect of the very short and distinct pulse and the therewith connected very quick acceleration of the drill spindle during such a pulse. This quick acceleration is provided by the stored energy of the elastic elements and leads to a longer engagement of the drill tip in the material due to the very short pulse, as figure 8 clearly illustrates (The pulse of the present invention and the sharp pulse curve I is much shorter than the sinusoidal pulse). This leads to a more removed material per time period compared to known drill devices. In addition, one can also see from the sharp pulse curve I in figure 8 that the drill tip is never fully or completely disengaged from the material not even during the deepest (highest) gullet or trough of the pulse.

The invention has now been explained referring to the figures 1 to 8 and also by mentioning some alternatives and specific solutions for details of the invention. Any combinations of such alternatives or specific solutions mentioned herein may be embodied in a drill device according to the inventive idea.

## Claims

1. A drill device comprising:
- a housing (2) having a first motion link (28);
- a drill spindle unit (12) arranged at least partially in the housing (2), the drill spindle unit (12) comprising a drill assembly (32), which is guided in the first motion link (28), the drill assembly (32) comprising bearings (40), a first coupling portion (30), a drill axle (44) configured to receive a drill, the drill axle (44) being embedded in the bearings (40) and being configured to rotate about a longitudinal axis (a), the drill spindle unit (12) further comprising at least a first elastic element (26) that is abutting the housing (2) with one end and the drill assembly (32) with the other end, whereby said first elastic element (26) is at least partially compressed when it is mounted in the drill device;
**characterized by** further comprising
- a pulse spindle unit (14) comprising a cylinder-shaped pulse spindle (34) that can be rotated about its longitudinal axis (b), the cylinder-shaped pulse spindle (34) being at least partially arranged within the housing (2), the cylinder-shaped pulse spindle (34) comprising a milled surface area (50) on the lateral surface,
wherein the longitudinal axis (b) of the cylinder-shaped pulse spindle (34) is arranged perpendicular to the longitudinal axis (a) of the drill axle (44), the drill spindle unit (12) being arranged so that the first coupling portion (30) is pushed towards the cylinder-shaped pulse spindle (34) so that along the longitudinal axis (a) of the drill axle (44) pulses can be generated when the cylinder-shaped pulse spindle (34) is rotating due to the lateral surface of the cylinder-shaped pulse spindle (34), which lateral surface is interrupted by the milled surface area (50) and due to the pre-compression of the elastic force of the at least partially compressed first elastic element (26).

2. The drill device according to claim 1, further comprising a damping unit (10) arranged at least partially in the housing (2), said housing (2) comprising a second motion link (20), the damping unit (10) comprising a second coupling portion (22), a counterweight (24) engaging the second motion link (20), at least a second elastic element (18) that is engaging the housing (2) and the counterweight (24), whereby said second elastic element (18) is at least partially compressed, wherein the cylinder-shaped pulse spindle (34) comprises at least a pair of milled surface areas (50) arranged on the cylinder-shaped pulse spindle (34) opposite one another and on opposite sides of the cylinder-shaped pulse spindle (34), the damping unit (10) and the drill spindle unit (12) being arranged opposite one another on either side of the pulse spindle unit (14), so that the first coupling portion (26) and the second coupling portion (22) are pushed, by the first and the second elastic elements (26, 18), towards the cylinder-shaped pulse spindle (34) opposite one another, so that synchronized pulses along the longitudinal axis (a) of the drill axle (44) in the damping unit (10) and the drill assembly (32) can be generated when the cylinder-shaped pulse spindle (34) is rotating.

3. The drill device according to any of claims 1 or 2, wherein the milled surface area(s) (50) are planar.

4. The drill device according to any of the previous claims 1 to 3, wherein the cylinder-shaped pulse spindle (34) can be displaced along its longitudinal axis (b), for example via a servomotor, the cylinder-shaped pulse spindle (34) comprising a part that is free of the milled surface(s) (50), which part can be displaced by displacing the cylinder-shaped pulse spindle (34), so that a point of contact between cylinder-shaped pulse spindle (34) and the first and/or second coupling portion (30, 22) is the part that is free of the milled surface(s) (50) for enabling a drilling operation without any pulses.

5. The drill device according to any of the previous claims 1 to 4, wherein the cylinder-shaped pulse spindle (34) can be displaced along its longitudinal axis (b), for example via a servomotor, and wherein the milled surface area(s) (50) are conically shaped as seen along the longitudinal axis (b) of the cylinder-shaped pulse spindle (34) so that a point of contact between the cylinder-shaped pulse spindle (34) and the first and/or second coupling portion (30, 22) can be chosen depending on the displacement of the cylinder-shaped pulse spindle (34) and that there with the amplitude of the pulses can be varied and adjusted.

6. The drill device according to any of the previous claims 1 to 5, wherein each of the first and second motion link(s) comprise at least one membrane (20, 28), wherein the drill spindle unit (12) and/or the dampening unit (10) are embedded in the housing (2) using such membranes (20, 28).

7. The drill device according to claim 6, wherein each of the first and second motion link(s) comprise two membranes (20, 28).

8. The drill device according to claim 6 or 7, wherein the membranes (20, 28) are made of sheet metal.

9. The drill device according to any of the previous claims 1 to 8, wherein the counterweight (24) is at least partially replaceable so that its weight can be matched to the weight of the drill assembly (32).

10. The drill device according to claim 9, wherein the weight of the counterweight (24) corresponds at least more or less to the weight of the drill assembly (32).

11. The drill device according to any of the previous claims, wherein the first coupling portion (30) and/or the second coupling portion (22) is designed as a pulley with ball bearings.

12. The drill device according to any of the previous claims 1 to 11, wherein the first and/or the second elastic element(s) (26, 18) is a spring, an elastomer, a pneumatic or hydraulic cylinder or any other suitable element that can store potential energy and convert it into kinetic energy.

13. The drill device according to any of the previous claims, wherein the first elastic element (26) and/or second elastic element (18) each comprise a Pair of a spring, an elastomer, a pneumatic or hydraulic cylinder or any other suitable element or combination thereof or any other elastic element that can store potential energy and convert it into kinetic energy.

14. The drill device according to any of the previous claims, wherein the cylinder-shaped pulse spindle (34) comprises a cylindric portion (62) with a diameter greater than the diameter of the cylinder-shaped pulse spindle (34) and wherein the cylindric portion (62) comprises the milled surface area(s) (50) and the lateral cylindric surface.

15. The drill device according to claim 2, wherein the cylinder-shaped pulse spindle (34) comprises more than one pair of milled surface areas (50) arranged opposite one another and wherein the milled surface areas (50) are spaced at regular intervals around the circumference of the cylinder-shaped pulse spindle (34).
